Europäisches Patentamt

European Patent Office

Office européen des brevets

(11) Veröffentlichungsnummer: **0 168 348**
**B1**

# EUROPÄISCHE PATENTSCHRIFT

(45) Veröffentlichungstag der Patentschrift:
07.01.88

(51) Int. Cl.⁴: **B 62 D 27/06**

(21) Anmeldenummer: 85810294.0

(22) Anmeldetag: 25.06.85

(54) Befestigung für Fahrzeugaufbauten an einem Chassis.

(30) Priorität: 10.07.84 CH 3340/84

(43) Veröffentlichungstag der Anmeldung:
15.01.86 Patentblatt 86/3

(45) Bekanntmachung des Hinweises auf die Patenterteilung:
07.01.88 Patentblatt 88/1

(84) Benannte Vertragsstaaten:
AT BE CH DE FR GB IT LI LU NL SE

(56) Entgegenhaltungen:
GB - A - 2 110 171
US - A - 3 910 624

(73) Patentinhaber: SCHWEIZERISCHE ALUMINIUM AG,
CH-3965 Chippis (CH)

(72) Erfinder: Hrasche, Heinrich, Zinggenstrasse 7,
CH-8953 Dietikon (CH)

## Beschreibung

Die Erfindung betrifft eine Befestigung aus einem Ober- und einem querschnittlich die gleiche Form aufweisenden Unterteil für Fahrzeugaufbauten an einem Chassis, wobei das Oberteil am Aufbau und das Unterteil am Chassis festgelegt ist und beide Teile in Gebrauchslage formschlüssig ineinandergreifen (siehe GB-A-2 110 171).

Bei derartigen Befestigungselementen handelt es sich normalerweise um Befestigungskonsolen, deren Ober- und Unterteil jeweils verschieden ausgebildet sind. Sie werden im Gussverfahren bzw. im Gesenkschmiedeverfahren hergestellt und in der Regel am Chassis bzw. am Aufbau angeschweisst. Im einen Teil sind dabei jeweils zwei Stege angeformt, welche von dem anderen Teil zugeordneten Zangenbacken umgriffen werden.

Diese Guss- bzw. Gesenkschmiedeteile haben den erheblichen Nachteil, dass Ober- und Unterteil verschieden ausgebildet sind, weshalb auch die Lagerhaltung der an sich schon teuren Elemente zusätzlich verteuert wird.

Die GB-A-2 110 171 beschreibt einen Fahrzeugaufbau mit formschlüssig ineinandergreifenden Profilen, welche querschnittlich die gleiche Form aufweisen. Die Profile erstrecken sich über die ganze Breite des Fahrzeugaufbaus und bilden so einen Längsanschlag. Da sie den Fahrzeugaufbau in Querrichtung nicht überragen, sind sie nur schwer zugänglich.

Die US-A-3 910 624 beschreibt ausserhalb eines Fahrzeugaufbaus angeordnete Befestigungselemente. Diese sind als Klips ausgebildet und sind weder direkt mit einer Seitenfläche des Fahrzeugaufbaus verschraubt, noch bilden sie einen Anschlag. Vielmehr dienen die erwähnten Klips ausschliesslich dazu, beim Anziehen der zugeordneten Schrauben eine Klemmkraft auszuüben.

Der Erfinder hat sich die Aufgabe gestellt, eine Befestigung der oben genannten Art zu entwickeln, welche eine wesentliche Kosteneinsparung mit sich bringt und leicht zu montieren ist.

Zur Lösung dieser Aufgabe führt, dass das Oberteil und das Unterteil der Befestigung zur Bildung eines Längs- und Queranschlags aus seitlich ausserhalb von Aufbau und Chassis angebrachten Profilen bestehen, wobei Teile der mit dem Aufbau verbundenen Profile das Chassis und/oder Teile der mit dem Chassis verbundenen Profile den Aufbau zur Bildung des Queranschlags in vertikaler Ebene übergreifen.

Die erfindungsgemässen Befestigungselemente bzw. Profile sind aufbauunabhängig, sie bilden durch Übergreifen einen Längs und Queranschlag.

Bevorzugt sind diese Profile im Strangpressverfahren, insbesondere aus Aluminium oder einer Aluminiumlegierung, hergestellt. Dies ist ein kostengünstiges Verfahren, und der Anwender kann beispielsweise bei einem Profilhersteller ganze Strangpressprofile einkaufen und diese dann auf seine gewünschte Stärke ablängen. Weiterhin lassen sich im Strangpressverfahren auf einfache Weise Bohrungen zur Aufnahme von Befestigungselementen oder ineinandergreifende Vorsprünge herausformen. Ein wesentlicher Vorteil der Erfindung liegt darin, dass sowohl für den Ober-, wie auch für den Unterteil der Aufbaubefestigung nur noch ein identisch geformtes Teil vorgesehen ist, so dass die Lagerhaltung ebenfalls vereinfacht wird.

In Gebrauchslage werden die Profile durch eine sie vertikal durchsetzende Langschraube verbunden. Die Bohrung hierzu muss selbstverständlich nachträglich angebracht werden.

Dadurch, dass im Strangpressverfahren, wie oben geschildert, waagrechte Bohrungen sehr einfach angeordnet werden können, ist es möglich, die Profile mit diese Bohrungen durchsetzenden Schrauben oder dgl. am Chassis oder am Aufbau festzulegen. Es entfällt der teurere Arbeitsgang des Schweissens, wobei auch das Auswechseln der Befestigungselemente, beispielsweise bei Beschädigung, erheblich erleichtert ist.

Bevorzugt weisen die Befestigungselemente, d.h. die stranggepressten Profile, jeweils einen im wesentlichen U-förmigen Querschnitt auf, wobei die so geformten Schenkel vorzugsweise von Schrauben durchsetzt werden.

Der die Schenkel verbindende Querbalken kann beispielsweise durch Ausbildung eines Walls verdickt sein, welchem sich dann in Gebrauchslage randseitig Ecksicken anschmiegen, die den Schenkelspitzen des jeweils anderen Profils sich gegenüberliegend eingeformt sind. Bei dieser Anordnung sitzt demnach das eine Profil dem anderen auf.

Eine weitere Ausführungsform sieht vor, dass der die Schenkel verbindende Querbalken mit Vorsprüngen versehen ist, welche in Gebrauchslage in eine zwischen den Vorsprüngen des korrespondierenden Profils gebildete Mulde und eine Ecksicke eingreifen. Hierbei liegen sich demnach die Profile einander zugewandt gegenüber.

Weitere Vorteile und Einzelheiten der Erfindung ergeben sich aus der nachfolgenden Beschreibung bevorzugter Ausführungsbeispiele sowie anhand der Zeichnung; diese zeigt schematisch in

Fig. 1 eine Ansicht einer Befestigung für Fahrzeugaufbauten in Gebrauchslage;

Fig. 2 einen Schnitt entlang Linie II-II in Fig. 1;

Fig. 3 eine Ansicht einer weiteren Ausführungsform einer Befestigung für Fahrzeugaufbauten.

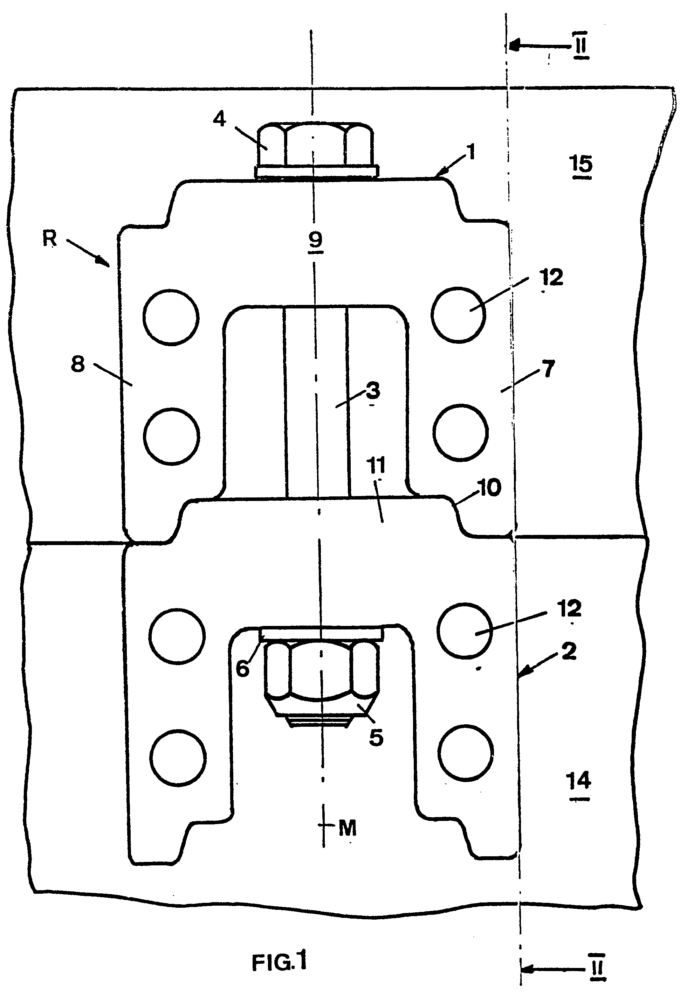

Eine erfindungsgemässe Befestigung R für Fahrzeugaufbauten an einem Chassis besteht nach Fig. 1 aus zwei gleichen Aluminium-Strangpressprofilen 1 und 2, welche durch eine Langschraube 3 entlang ihrer Mittelachse M miteinander verbunden sind. Diese Langschraube 3 besitzt einen Sechskantkopf 4. Zum Festlegen dient eine der Langschraube 3 aufgesetzte Mutter 5 mit Unterlagsscheibe 6.

Die beiden Profile 1 und 2 werden vorzugsweise von Strangpressprofilen gleicher Art abgelängt. Sie weisen einen U-förmigen Querschnitt mit zwei Schenkeln 7, 8 und einem diese verbindenden Querbalken 9 auf. Die Schenkel 7, 8 sind an ihrer Spitze mit einander zugekehrten Ecksicken 10 versehen, mit denen sie sich in Gebrauchslage einem aus dem Querbalken 9 geformten Wall 11 anschmiegen.

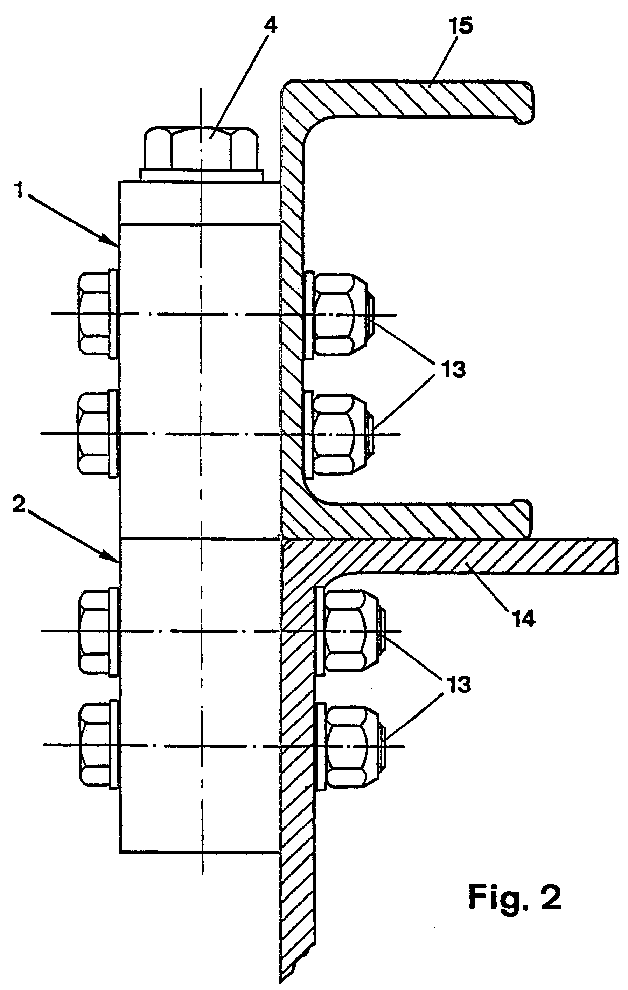

Jeder Schenkel 7, 8 hat je zwei Bohrungen 12, welche, wie in Fig. 2 dargestellt, von Schrauben 13 durchsetzt sind. Auf diese Weise wird das untere Profil 2 an einem Chassis 14 eines nicht näher dargestellten Lastwagens und das obere Profil 1 am Aufbau 15 festgelegt.

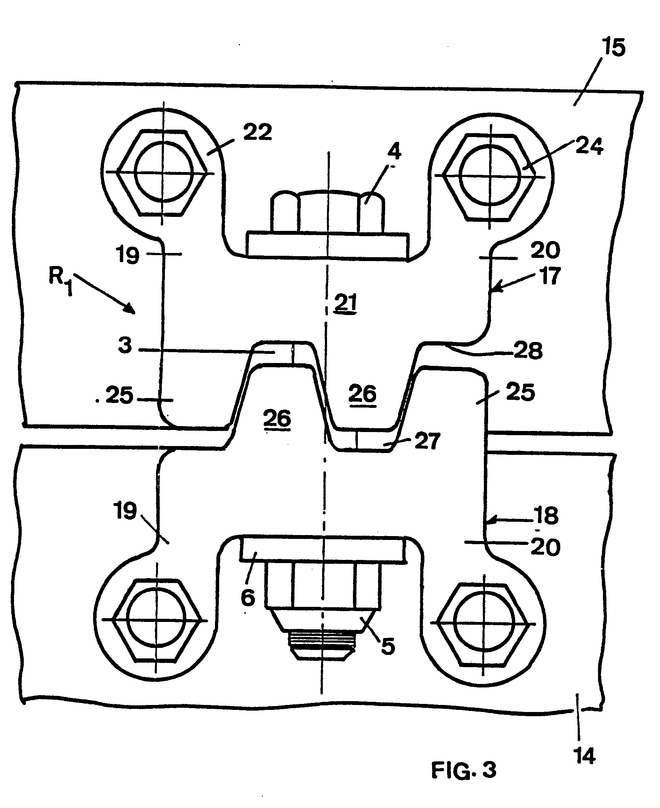

Ein weiteres Ausführungsbeispiel einer Befestigung R₁ eines Fahrzeugaufbaus an einem Chassis zeigt Fig. 3. Die beiden dort dargestellten Strangpressprofile 17, 18 weisen ebenfalls einen querschnittlich U-förmigen Teil auf mit zwei Schenkeln 19, 20 und einem sie verbindenden Querbalken 21. Die Schenkelspitzen 22 sind jedoch kederartig verbreitert und von Bohrungen zur Aufnahme von Schrauben 24 am Aufbau 15 bzw.Chassis 14 durchsetzt. Aus dem Querbalken 21 sind zwei Vorsprünge 25, 26 herausgeformt, welche beim Zusammenbau in eine zwischen den Vorsprüngen des anderen Profils 18 gebildete Mulde 27 und in eine Ecksicke 28 eingreifen. Die Profile 17, 18 werden — analog zu Fig. 1 — durch eine Langschraube 3 miteinander verbunden.

## Patentansprüche

1. Befestigung aus einem Ober- und einem querschnittlich die gleiche Form aufweisenden Unterteil für Fahrzeugaufbauten (15) an einem Chassis (14), wobei das Oberteil am Aufbau und das Unterteil am Chassis festgelegt ist und beide Teile in Gebrauchslage formschlüssig ineinandergreifen, dadurch gekennzeichnet, dass das Ober- und Unterteil der Befestigung zur Bildung eines Längs- und Queranschlags aus seitlich ausserhalb von Aufbau (15) und Chassis (14) angebrachten Profilen (1, 2 bzw. 17, 18), wobei Teile der mit dem Aufbau (15) verbundenen Profile (1, 17) das Chassis (14) und/oder Teile der mit dem Chassis (14) verbundenen Profile (2, 18) den Aufbau (15) zur Bildung des Queranschlags in vertikaler Ebene übergreifen.

2. Befestigung nach Anspruch 1, dadurch gekennzeichnet, dass die Profile (1, 2 bzw. 17, 18) im Strangpressverfahren hergestellt sind.

3. Befestigung nach Anspruch 2, dadurch gekennzeichnet, dass die Profile (1, 2 bzw. 17, 18) aus Aluminium oder einer Aluminiumlegierung bestehen.

4. Befestigung nach einem der Ansprüche 1 bis 3, dadurch gekennzeichnet, dass die Profile (1, 2 bzw. 17, 18) in Gebrauchslage durch eine vertikal angeordnete, sie durchsetzende Langschraube (3) mit aufgesetzter Mutter (5) verbunden sind.

5. Befestigung nach einem der Ansprüche 1 bis 4, dadurch gekennzeichnet, dass die Profile (1, 2 bzw. 17, 18) über Schrauben (13, 24) am Aufbau (15) bzw. am Chassis (14) festgelegt sind.

6. Befestigung nach einem der Ansprüche 1 bis 5, dadurch gekennzeichnet, dass die Profile (1, 2 bzw. 17, 18) jeweils einen im wesentlichen U-förmigen Querschnitt aufweisen, wobei die so geformten Schenkel (7, 8 bzw. 19, 20) von Schrauben (13, 24) durchsetzt sind.

7. Befestigung nach Anspruch 6, dadurch gekennzeichnet, dass der die Schenkel (7, 8) verbindende Querbalken (9) einen Wall (11) aufweist, welchem sich randseitig in Gebrauchslage den Schenkeln (7, 8) des anderen Profils eingeformte Ecksicken (10) anschmiegen.

8. Befestigung nach Anspruch 6, dadurch gekennzeichnet, dass dem die Schenkel (19, 20) verbindenden Querbalken (21) Vorsprünge (25, 26) angeformt sind, welche in Gebrauchslage in eine zwischen den Vorsprüngen (25, 26) des korrespondierenden Profils gebildete Mulde (27) und eine Ecksicke (28) eingreifen.

## Claims

1. A fastening consisting of an upper part and a lower part exhibiting the same cross-sectional shape for motor vehicle bodies (15) on a frame (14), the upper part being fastened to the body and the lower part to the frame and both parts interengaging positively in the position of use, characterized in that for the formation of a longitudinal stop and a transverse stop the upper and lower parts of the fastening consist of profiles (1, 2 resp. 17, 18) fitted outside the body (15) and the frame (14) at the side, so that parts of the profiles (1, 17) connected to the body (15) overlap the frame (14) and/or parts of the profiles (2, 18) connected to the frame (14) overlap the body (15) for the formation of the transverse stop in a vertical plane.

2. A fastening as in Claim 1, characterized in that the profiles (1, 2 resp. 17, 18) are produced by the method of extrusion.

3. A fastening as in Claim 2, characterized in that the profiles (1, 2 resp. 17, 18) consist of aluminium or an aluminium alloy.

4. A fastening as in one of the Claims 1 to 3, characterized in that the profiles (1, 2 resp. 17, 18) in the position of use are connected by a vertically arranged long bolt (3) passing through them and fitted with a nut (5).

5. A fastening as in one of the Claims 1 to 4, characterized in that the profiles (1, 2 resp. 17, 18) are fastened to the body (15) and the frame (14) respectively by bolts (13, 24).

6. A fastening as in one of the Claims 1 to 5, characterized in that the profiles (1, 2 resp. 17, 18) exhibit respectively an essentially U-shaped cross-section and bolts (13, 24) pass through the arms (7, 8 resp. 19, 20) so formed.

7. A fastening as in Claim 6, characterized in that the arch (9) connecting the arms (7, 8) exhibits a mound (11) against which in the position of use corner beads (10) shaped in the arms (7, 8) of the other profile fit closely.

8. A fastening as in Claim 6, characterized in that into the arch (21) connecting the arms (19, 20) are shaped projections (25, 26) which in the position of use engage in a trough (27) formed between the projections (25, 26) from the corresponding profile and in a corner bead (28).

## Revendications

1. Fixation constituée d'une partie supérieure et d'une partie inférieure présentant en coupe la même forme, pour fixer une carrosserie de véhicule (15) sur un châssis (14), la partie supérieure étant fixée à la carrosserie et la partie inférieure, au châssis, et les deux parties, en position d'emploi, engrenant l'une dans l'autre de par la forme, caractérisée en ce que la partie supérieure et la partie inférieure de la fixation, pour donner une butée longitudinale et transversale, sont constituées de profilés (1, 2 ou 17, 18) rapportés latéralement et à l'extérieur de la carrosserie (15) et du châssis (14), les parties des profilés (1, 17) liés à la carrosserie (15) saisissant le châssis (14) par-dessus et/ou les parties des profilés (2, 18) liés au châssis (14) saisissant la carrosserie (15) par-dessus pour former la butée transversale dans le plan vertical.

2. Fixation selon la revendication 1, caractérisée en ce que les profilés (1, 2 ou 17, 18) sont fabriqués par le procédé d'extrusion.

3. Fixation selon la revendication 2, caractérisée en ce que les profilés (1, 2 ou 17, 18) sont en aluminium ou en un alliage d'aluminium.

4. Fixation selon l'une des revendications 1 à 3, caractérisée en ce que les profilés (1, 2 ou 17, 18), en position d'emploi, sont réunis par une vis (3) qui est disposée verticalement et qui les traverse, avec un écrou (5) vissé dessus.

5. Fixation selon l'une des revendications 1 à 4, caractérisée en ce que les profilés (1, 2 ou 17, 18) sont fixés sur la carrosserie (15) ou sur le châssis (14) au moyen de vis (13, 24).

6. Fixation selon l'une des revendications 1 à 5, caractérisée en ce que les profilés (1, 2 ou 17, 18) présentent respectivement une section sensiblement en forme de U, les ailes (7, 8 ou 19, 20) ainsi formées étant traversées par des vis (13, 24).

7. Fixation selon la revendication 6, caractérisée en ce que la traverse (9) qui relie les ailes (7, 8) présente un bossage (11) auquel, en position d'emploi, s'ajustent en bordure des moulures d'angle (10) venues de forme sur les ailes (7, 8) de l'autre profilé.

8. Fixation selon la revendication 6, caractérisée en ce que sur la traverse (21) qui relie les ailes (19, 20) sont venues de forme des saillies (25, 26) qui, en position d'emploi, pénètrent dans une niche (27) et une moulure d'angle (28) formées entre les saillies (25, 26) du profilé correspondant.

FIG.1

**Fig. 2**

FIG. 3